(19) Europäisches Patentamt
European Patent Office
Office européen des brevets

(11) **EP 2 568 251 A1**

(12) **DEMANDE DE BREVET EUROPEEN**

(43) Date de publication:
**13.03.2013 Bulletin 2013/11**

(21) Numéro de dépôt: **12183747.0**

(22) Date de dépôt: **10.09.2012**

(51) Int Cl.:
***F41G 7/28*** (2006.01)    ***G01S 1/14*** (2006.01)
***F41G 7/30*** (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.09.2011  FR 1102735**

(71) Demandeur: **Thales**
**92200 Neuilly Sur Seine (FR)**

(72) Inventeurs:
• **Cornic, Pascal**
  **29820 Guillers (FR)**
• **Garrec, Patrick**
  **33700 Merignac (FR)**
• **Artis, Jean-Paul**
  **29280 Plouzane (FR)**

(74) Mandataire: **Brunelli, Gérald**
**Marks & Clerk France**
**Immeuble Visium**
**22, avenue Aristide Briand**
**94117 Arcueil Cedex (FR)**

(54) **Système de localisation d'un engin volant**

(57)    L'invention a pour objet un système de localisation et de guidage comprenant un engin volant et un dispositif de réception (401). Ledit engin comprend une pluralité d'antennes (400, 402) réparties autour de son fuselage et émettant vers l'arrière dudit engin en polarisation rectiligne, les signaux émis étant spécifiques à chaque antenne, les positions et les dimensions desdites antennes (400, 402) étant choisies de manière à ce que le corps de l'engin volant évite par masquage pour au moins une antenne les réflexions du signal émis par cette antenne sur le sol ou sur des obstacles latéraux quelle que soit la position de l'engin volant. Le dispositif de réception (401) est placé sensiblement sur l'axe de trajectoire de l'engin volant et orienté dans sa direction de façon à viser l'arrière de celui-ci et comprenant au moins deux antennes mono-pulse (600, 601) fonctionnant dans des plans orthogonaux et des moyens de détermination de la position de l'engin volant par analyse des signaux (403, 404) émis par les antennes (400, 402) et reçus par les antennes (600, 601) du dispositif de réception.

FIG.4

**Description**

L'invention concerne un système de localisation d'un engin volant, un engin volant et un dispositif de réception. Elle s'applique notamment au domaine de la localisation haute précision d'engins volants et au guidage vers un objectif désigné.

Il existe deux grandes familles de systèmes de guidage d'engins volants.

La première famille regroupe les systèmes d'autoguidage dans lesquels l'engin volant est capable de se diriger de lui-même en direction d'un objectif. Ces systèmes autonomes mettent habituellement en oeuvre des moyens inertiels embarqués, associés à un ensemble de désignation électromagnétique laser ou infrarouge pointé dans la direction de l'objectif. Dans un tel cas, le volume et le poids de l'électronique embarqué est significatif et impacte directement le coût de l'engin.

La deuxième famille regroupe les systèmes de guidage télécommandés à partir d'une installation fixe au sol, ou d'une installation embarquée sur un véhicule au sol ou encore aéroportée. Ces systèmes utilisent habituellement un senseur actif ou passif capable de localiser l'engin volant par rapport à l'objectif. Il est intéressant dans ce cas d'utiliser des techniques radar en mode actif ou passif, cette technique permettant un fonctionnement « tout temps ».

Le mode radar actif est cependant difficilement utilisable quand la surface équivalente des engins volants à guider est faible. D'autre part, ce mode ne permet pas une identification directe de la cible. C'est pourquoi on utilise plutôt un mode passif se basant sur un émetteur embarqué dans l'engin volant, ledit engin étant ensuite localisé par un système au sol ou lui-même embarqué sur un véhicule. Cependant, lorsque l'engin vole à une altitude de quelques décimètres ou de quelques mètres, la localisation en site s'avère très délicate à cause des réflexions de signal sur le sol. Par ailleurs, la localisation peut également être perturbée dans le plan horizontal par des réflexions latérales sur des objets environnants comme par exemple des immeubles. De plus, un émetteur embarqué ne permet pas de mesurer la distance parcourue s'il ne dispose pas d'une fonction répondeur. Si une fonction répondeur est mise en oeuvre au niveau de l'émetteur, le coût et le volume de l'électronique embarquée dans l'engin volant s'accroissent de façon significative.

Lorsque l'engin volant tourne sur lui même, il peut être intéressant de connaître l'angle de roulis à chaque instant pour garantir un guidage efficace. Cette information n'est pas accessible avec les systèmes classiques, que ce soit dans le cadre des systèmes autoguidés ou des systèmes guidés à partir d'une installation fixe au sol ou elle-même embarquée sur un véhicule terrestre ou aéroporté.

Un but de l'invention est notamment de corriger les inconvénients précités.

A cet effet l'invention a pour objet un système de localisation et de guidage comprenant un engin volant et un dispositif de réception. Ledit engin comprend une pluralité d'antennes réparties autour de son fuselage et émettant vers l'arrière dudit engin en polarisation rectiligne, les signaux émis étant spécifiques à chaque antenne, les positions et les dimensions desdites antennes étant choisies de manière à ce que le corps de l'engin volant évite par masquage pour au moins une antenne les réflexions du signal émis par cette antenne sur le sol ou sur des obstacles latéraux quelle que soit la position de l'engin volant. Le dispositif de réception est placé sensiblement sur l'axe de trajectoire de l'engin volant et orienté dans sa direction de façon à viser l'arrière de celui-ci et comprenant au moins deux antennes mono-pulse fonctionnant dans des plans orthogonaux et des moyens de détermination de la position de l'engin volant par analyse des signaux émis par les antennes de l'engin et reçus par les antennes du dispositif de réception.

Selon un aspect de l'invention, un circuit de contrôle de modulation caractérisant le signal émis par chacune des antennes est utilisé par l'engin volant de façon à ce que le dispositif de réception soit en mesure d'identifier et de traiter séparément les signaux émis par chacune de ces antennes.

Un générateur de formes d'onde est par exemple embarqué dans l'engin volant et délivre séquentiellement et de façon périodique à chacune des antennes sur une fréquence différente un signal sinusoïdal.

Dans un mode de réalisation, un temps mort S d'émission est aménagé périodiquement de façon à permettre la synchronisation d'un dispositif de réception.

L'invention a aussi pour objet un engin volant comprenant une pluralité d'antennes réparties autour de son fuselage et émettant vers l'arrière dudit engin en polarisation rectiligne, les signaux émis étant spécifiques à chaque antenne, les positions et les dimensions desdites antennes étant choisies de manière à ce que le corps de l'engin volant évite par masquage pour au moins une antenne les réflexions du signal émis par cette antenne sur le sol ou sur des obstacles latéraux quelle que soit la position de l'engin volant.

Selon un aspect de l'invention, les antennes sont réalisées à partir de lignes hyperfréquence à fuites, rectilignes et disposées sensiblement perpendiculairement au fuselage de l'engin.

Selon un autre aspect de l'invention, des ailettes servent à guider l'engin, les antennes d'émission étant fixées sur lesdites ailettes.

L'invention a aussi pour objet un dispositif de réception comprenant au moins deux antennes mono-pulse pointées selon la même direction de visée et fonctionnant dans des plans orthogonaux et des moyens pour identifier et traiter séparément les signaux émis par chacune de ces antennes d'un engin volant tel que décrit précédemment. Lesdits moyens sont adaptés de manière à ce les signaux émis par chacune de ces antennes soient identifiés et traités séparément et que les signaux reçus perturbés par des réflexions soient automatiquement détectés et rejetés.

Deux chaînes de réception sont par exemple employées, chaque chaîne comprenant un oscillateur de référence cohérent contrôlé en fréquence, des amplificateurs faible bruit et des filtres, d'un mélangeur et de moyens de conversion analogique-numérique, des moyens de codage et de traitement de signal basé sur une transformée de Fourier rapide FFT et des moyens de traitement communs aux deux chaînes.

La localisation angulaire en site et en gisement est par exemple déterminée par écartométrie mono-pulse deux plans à partir des signaux émis par les antennes de l'engin volant. Selon un aspect de l'invention, la fréquence doppler du signal émis par l'engin sur chacune des sources d'émission est mesurée, la distance parcourue par l'engin étant déduite par intégration temporelle de cette mesure.

Selon un autre aspect de l'invention, la valeur du roulis et la vitesse du roulis de l'engin sont estimées en mesurant l'amplitude du signal reçu sur deux polarisations rectilignes orthogonales.

Dans un mode de réalisation la composante à rejeter des signaux reçus est identifiée en vérifiant la cohérence d'amplitude desdits signaux reçu au cours du temps.

Dans un autre mode de réalisation au moins deux antennes identiques et de même polarisation sont utilisées en réception, disposées à deux hauteurs différentes, les mesures correspondant à des signaux d'amplitudes différentes reçus simultanément sur les deux antennes étant rejetés.

Dans un autre mode de réalisation, quatre antennes sont utilisées, deux antennes en polarisation verticale étant réparties à des hauteurs différentes et permettant la mesure de site, deux autres antennes étant en polarisation horizontale et réparties sur un plan horizontal pour permettre la mesure de gisement.

Selon un aspect de l'invention, la position du dispositif de réception est située sensiblement au niveau du sol, ledit dispositif étant fixe ou mobile.

De manière alternative, le dispositif de réception est embarqué dans un aéronef.

L'invention a notamment comme avantage d'éviter l'utilisation de gyroscopes embarqués. Un autre avantage est la compacité et le faible coût du dispositif de réception, ledit dispositif pouvant être réalisé à l'aide de technologies développées pour des marchés de masse comme les radars pour automobiles fonctionnant en ondes millimétriques.

D'autres caractéristiques et avantages de l'invention apparaîtront à l'aide de la description qui suit donnée à titre illustratif et non limitatif, faite en regard des dessins annexés parmi lesquels :

- la figure 1 donne un exemple d'engin volant pouvant être guidé par le système selon l'invention ;
- la figure 2 présente un exemple simplifié du dispositif d'émission embarqué ;
- la figure 3 donne un exemple d'émission du dispositif d'émission compris dans l'engin volant ;
- la figure 4 présente un exemple de configuration d'antennes embarquées sur un engin volant guidé par le système selon l'invention ;
- la figure 5 illustre un exemple de vue par l'arrière de l'engin volant comprenant le dispositif embarqué d'émission et correspondant au cas limite d'un roulis de 45° ;
- la figure 6 présente un premier exemple de configuration d'antennes utilisée dans un dispositif de réception ;
- la figure 7 présente un second exemple de configuration d'antennes utilisée dans un dispositif de réception ;
- la figure 8 présente un exemple de circuit de réception comprenant deux sources mono-pulse ;
- la figure 9 montre pour un coefficient de réception de 0,9 et une longueur d'onde de 4 mm, l'allure des franges d'interférences dans un cas typique où l'engin vole à 1 m au dessus du sol, et où le dispositif de réception est lui aussi à 1 m de hauteur par rapport au sol ;
- la figure 10 présente un exemple de dispositif de réception comprenant alors trois récepteurs, dont deux sont utilisés pour la mesure de site ;
- la figure 11 présente la différence des niveaux d'amplitude reçus en fonction de la distance pour deux antennes espacées de 10 cm en hauteur ;
- la figure 12 présente un exemple de configuration d'antennes appartenant au dispositif de réception et permettant de s'affranchir à la fois des réflexions sur le sol et des réflexions latérales par la diversité de position des antennes ;
- la figure 13 illustre le principe d'estimation du roulis.

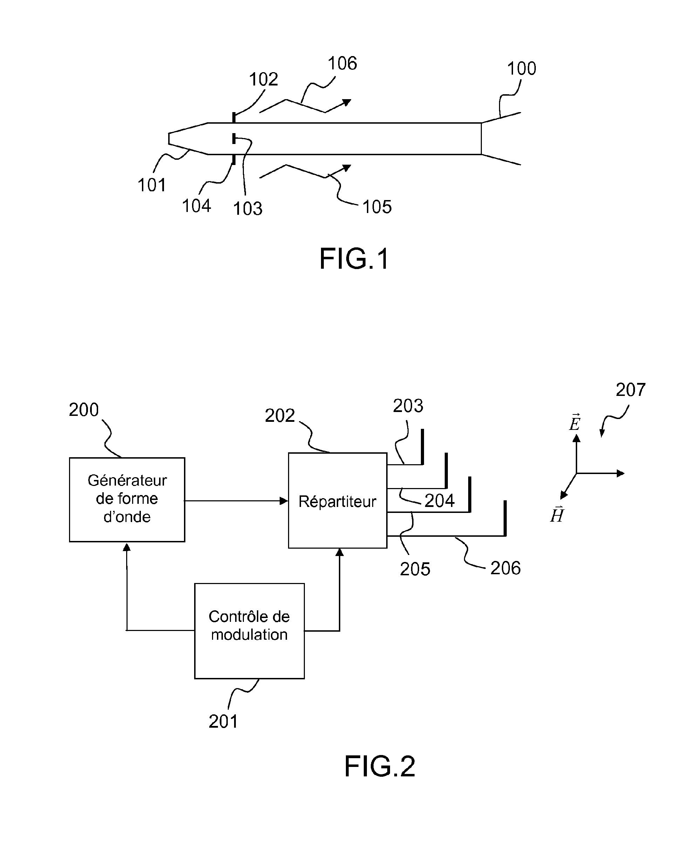

La figure 1 donne un exemple d'engin volant pouvant être guidé par le système selon l'invention. Cet objet volant est par exemple de forme cylindrique, comprend en partie arrière un propulseur 100 et se termine à l'avant par une pointe en forme de cône 101.

Le système de guidage selon l'invention associe un émetteur miniature embarqué dans l'engin volant appelé dispositif d'émission embarqué. Le système comprend aussi un dispositif de réception. Dans un mode de réalisation préféré de l'invention, le dispositif de réception se trouve sensiblement au niveau de la surface terrestre, que ce soit sur une route ou sur la mer. De plus, ledit dispositif de réception est fixe ou mobile. Il peut donc être embarqué dans un véhicule ou un bateau. Dans un autre mode de réalisation, le dispositif de réception est embarqué sur un aéronef.

Le dispositif d'émission embarqué fonctionne à faible puissance en ondes millimétriques et alimente plusieurs antennes de façon séquentielle ou simultanée, ces antennes étant réparties autour de l'engin volant de forme cylindrique et rayonnant en polarisation rectiligne vers l'arrière de l'objet. Dans un mode de réalisation préféré, ces antennes émettent en polarisation rectiligne verticale locale, c'est-à-dire pour chacune selon un axe perpendiculaire au plan tangent au fuselage en leur point de localisation sur ce dernier.

Dans ce dispositif, la dimension et la position des antennes sont optimisées pour que le corps de l'engin volant interdise par masquage les réflexions de l'onde émise sur le sol ou sur des obstacles latéraux, pour au moins une antenne quelle que soit la position de l'engin.

Le dispositif de réception peut être placé sensiblement sur l'axe de trajectoire, proche du lieu du point de départ de l'engin volant et orienté dans la direction dudit engin de façon à viser l'arrière de celui-ci. Ce récepteur est apte à recevoir les signaux émis par le dispositif embarqué et comprend au moins deux antennes mono-pulse fonctionnant dans des plans orthogonaux, et dispose d'un traitement du signal reçu permettant la détection, la mesure de position en trois dimensions, la trajectoire et l'angle de roulis de l'objet volant.

Le dispositif d'émission embarqué alimente simultanément ou séquentiellement plusieurs antennes 102, 103, 104 réparties selon un cercle centré sur le fuselage de l'engin et dont les faisceaux 105, 106 sont orientés vers l'arrière de celui-ci.

Afin de caractériser chaque antenne 102, 103, 104 une modulation ou un codage spécifique est alloué à chacune d'elles.

Les antennes 102, 103, 104 sont disposées de façon à ce que le rayonnement d'au moins l'une d'entre elles ne soit pas altéré par les réflexions sur le sol, et qu'en présence d'un obstacle latéral sur un côté de la trajectoire, le rayonnement d'au moins une autre ne soit pas altéré par les réflexions sur cet obstacle, quelle que soit la position de l'engin. Ces antennes 102, 103, 104 sont orientées sensiblement de façon perpendiculaire au fuselage.

Le dispositif de réception établit une localisation angulaire en site et en gisement par écartométrie mono-pulse deux plans à partir des signaux émis par chacune des sources d'émission. A chaque instant, les mesures perturbées par les réflexions sont automatiquement détectées et rejetées par le système, pour ne retenir que la ou les mesures valides.

En parallèle, le dispositif de réception mesure la fréquence doppler du signal émis par l'engin sur chacune des sources d'émission, et en déduit par intégration temporelle la distance parcourue par celui-ci.

En troisième lieu, ce dispositif établit la valeur du roulis et la vitesse du roulis de l'engin en mesurant l'amplitude du signal reçu sur deux polarisations rectilignes orthogonales.

La figure 2 présente un exemple simplifié du dispositif d'émission embarqué fonctionnant par exemple en ondes millimétriques. Ce dispositif comprend au moins un générateur de formes d'onde millimétrique 200, un circuit de contrôle de modulation 201, un répartiteur 202 et quatre antennes 203, 204, 205, 206 rayonnant en polarisation rectiligne 207. Dans un mode de réalisation préféré, la fréquence d'émission est de l'ordre de 80 GHz.

Le circuit de contrôle de modulation 201 a pour fonction de caractériser le signal émis par chacune des antennes, de façon à ce que le dispositif de réception soit en mesure d'identifier et de traiter séparément les signaux émis par chacune de ces antennes. La modulation peut s'effectuer en amplitude, en phase ou encore en fréquence. Dans un mode de réalisation préféré, le générateur de forme d'onde délivre un signal sinusoïdal à chacune des antennes sur une fréquence différente.

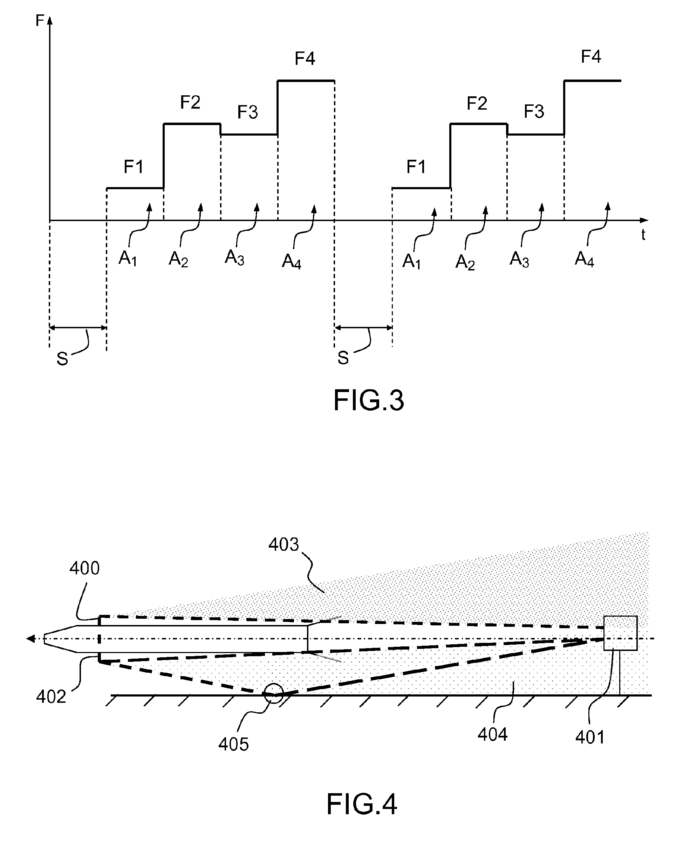

La figure 3 donne un exemple de dispositif d'émission embarqué. A titre d'exemple, le générateur de formes d'onde 200 alimente séquentiellement et de façon périodique chacune des antennes référencées $A_1$ à $A_N$ par des tronçons de sinusoïde de fréquences F1 à FN de manière à ce que la continuité de la phase soit assurée entre les différents tronçons. Un exemple de cycle est illustré à l'aide de la figure 3 ci-dessous dans le cas où 4 antennes $A_1$ à $A_4$ sont utilisées, chaque antenne rayonnant pendant un cinquième du temps de cycle. Dans cet exemple, un temps mort S est aménagé pendant un cinquième du temps de cycle de façon à permettre la synchronisation du récepteur.

Dans un tel mode de réalisation, le répartiteur 202 fait office de circuit de distribution et peut être un circuit de commutation à une entrée et à quatre sorties, connu de l'homme de l'art sous l'appellation SP4T, sigle venant de l'expression anglo-saxonne « Single-Pole Four-Throw ».

Les antennes $A_1$ à $A_N$ sont réalisées par exemple à partir de lignes hyperfréquence à fuites, rectilignes et disposées sensiblement perpendiculairement au fuselage de l'engin.

La dimension longitudinale des antennes, leur orientation et leur position sont optimisées de façon à ce que le rayonnement sous le plan tangent au fuselage sur lequel repose la base de l'antenne considérée soit très faible.

La figure 4 présente un exemple de configuration d'antenne embarqué sur un engin volant 406 guidé par le système selon l'invention. Dans cet exemple, le dispositif de réception 401 est un dispositif de réception fixe placé au niveau du sol. Si plusieurs antennes réparties régulièrement autour du fuselage sont utilisées, il apparaît que le signal 403 émis par l'antenne 400 située au-dessus de l'engin en direction du dispositif de réception 401 ne peut atteindre le sol car celui-ci est masqué par le fuselage, alors que le signal 404 émis par l'antenne opposée 402 subit des réflexions 405 sur le sol. Dans de telles conditions, le signal émis par l'antenne 400 peut être utilisé de façon optimale par le récepteur pour estimer notamment la position site de l'engin volant.

Ce principe peut être respecté quel que soit le roulis que subit l'engin volant en répartissant de façon régulière au moins quatre antennes autour du fuselage, et en optimisant la longueur des antennes élémentaires par rapport au diamètre du fuselage de façon à ce qu'au moins une antenne soit rendue insensible aux effets de réflexion.

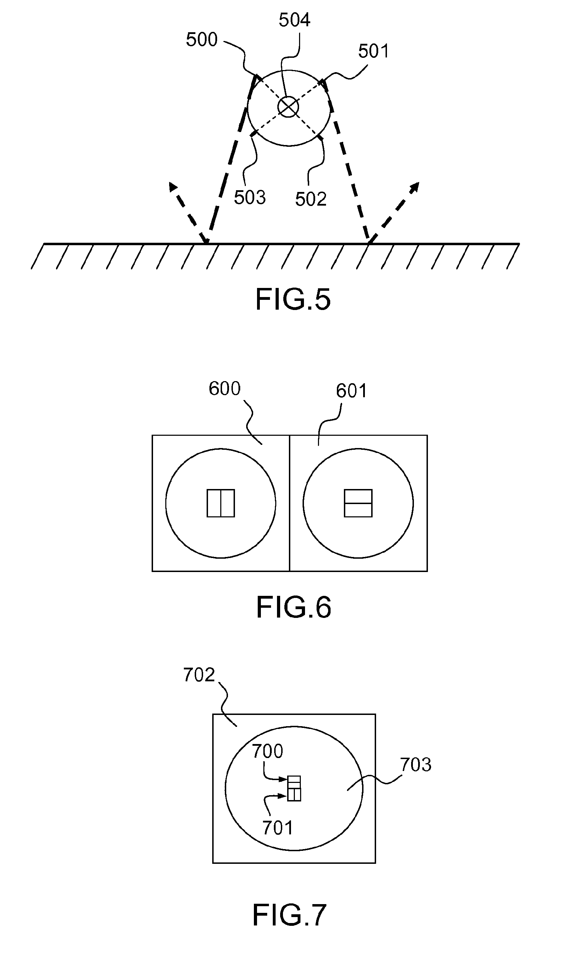

La figure 5 illustre un exemple de vue par l'arrière de l'engin volant comprenant le dispositif embarqué d'émission et correspondant au cas limite d'un roulis de 45°. Les signaux émis par les antennes 500 et 501 ne peuvent après réflexion sur le sol atteindre le récepteur qui est placé dans l'axe de la trajectoire 504 de l'engin, du fait de leur angle d'incidence sur le sol. Au contraire, les signaux émis par les antennes 502 et 503 peuvent après réflexion sur le sol atteindre le récepteur qui est placé suivant l'axe de la trajectoire 504.

De la même façon, lorsqu'une antenne est susceptible d'éclairer un obstacle latéral situé le long de la trajectoire de l'engin, l'antenne située du côté opposé du fuselage n'est pas affectée par les réflexions sur cet obstacle.

Dans un mode de réalisation préféré, les antennes sont rentrées dans le fuselage avant le lancement et déployées automatiquement dès la sortie du tube de lancement.

Les circuits de génération de la forme d'onde, de contrôle de modulation et de distribution peuvent être intégrés dans le fuselage et reliés aux antennes par une liaison hyperfréquence souple permettant le déploiement des antennes.

Dans un mode de réalisation avantageux, les antennes d'émission sont fixées sur les ailettes appelées aussi « canards » et servant à guider l'engin.

La figure 6 présente un premier exemple de configuration d'antennes utilisée dans un dispositif de réception.

Dans cet exemple, le dispositif de réception comprend deux antennes 600, 601 identiques et indépendantes fonctionnant en ondes millimétriques dans la bande de fréquence correspondant au dispositif embarqué d'émission. Un dispositif de réception utilisé dans le cadre de l'invention comprendra en outre et des moyens de traitement communs aux antennes. Lesdites antennes peuvent être séparées ou bien constituer un seul ensemble physique. Elles sont pointées selon la même direction de visée mais orientées perpendiculairement l'une par rapport à l'autre de façon à ce que leur gain respectifs soient identiques pour deux polarisations rectilignes orthogonales.

A titre d'exemple, la première antenne 600 fonctionne en polarisation horizontale et réalise l'estimation du gisement de l'engin tandis que la deuxième antenne 601 fonctionne en polarisation verticale et réalise l'estimation du site de l'engin.

La figure 7 présente un second exemple de configuration d'antennes utilisée dans un dispositif de réception.

Cette mise en oeuvre alternative consiste à regrouper les deux récepteurs dans un bloc physique unique 702, les deux récepteurs pouvant dans ce cas partager le même dispositif de focalisation 703, avec au foyer de celui-ci deux sources monopulse 700, 701 en polarisations orthogonales.

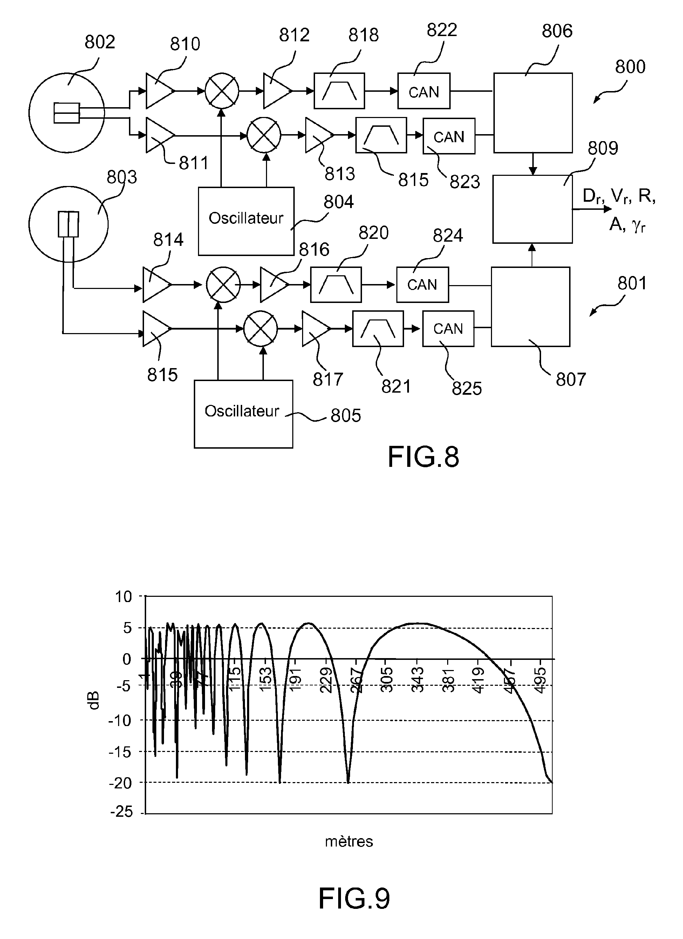

La figure 8 présente un exemple de circuit de réception comprenant deux sources mono-pulse. Ce circuit comprend deux chaînes de réception 800, 801. Chaque chaîne comprend un oscillateur de référence cohérent contrôlé en fréquence 804, 805, des amplificateurs faible bruit 810, 811, 812, 813, 814, 815, 816, 817 et des filtres 818, 819, 820, 821, un mélangeur, des moyens de conversion analogique-numérique 822, 823, 824, 825, des moyens de codage et de traitement de signal basé sur une transformée de Fourier rapide FFT 806, 807, et des moyens de traitement communs 809. Les moyens de traitement communs permettent de déterminer la distance parcourue Dr de l'engin volant, sa vitesse radial Vr, son accélération $\gamma r$, le roulis R, son Gisement A et son Site E.

En fonction du mode de réalisation, le dispositif de réception peut comprendre plus de deux récepteurs, en particulier pour détecter et rejeter les signaux perturbés par les réflexions.

L'oscillateur contrôlé en fréquence peut être commun aux récepteurs.

Le principe de fonctionnement du dispositif de réception et les moyens utilisés pour estimer les paramètres relatifs à la trajectoire et la présentation de l'engin sont décrits ci-après.

Pour ce qui est de la détection des signaux émis par le dispositif d'émission embarqué, l'émission est activée avant le déclenchement du tir, typiquement quelques dizaines de millisecondes plus tôt. Les fréquences d'émission Fi sont connues et contenues dans une bande de fréquence $\Delta F$ autour d'une fréquence moyenne Fe.

Au niveau du dispositif de réception, la fréquence des oscillateurs de référence 804 et 805 est égale à une valeur fixe Fr, telle que les différences de fréquence |Fi-Fr| soient toutes inférieures à la bande passante des filtres de réception 818, 819, 820, 821.

Lorsque l'émetteur embarqué est activé, les signaux émis par celui-ci sont captés par les antennes 802, 803, démodulés par les oscillateurs de référence 804, 805, et transmis aux traitements de signaux FFT 806, 807.

Une détection et une mesure des fréquences de battement Fb(0)=|Fi-Fr| sont ainsi effectuées alors que la vitesse de l'engin Vr est encore nulle.

Il est ensuite procédé à une estimation de la vitesse radiale et de la distance parcourue. L'opération de détection 809 en sortie de FFT 800, 801 est répétée à intervalles de temps réguliers t=kTr, alors que l'engin est en mouvement, faisant apparaître de nouvelles fréquences de battement.

D'une façon générale, ces nouvelles fréquences de battement peuvent être déterminées à l'instant t=kxTr en utilisant l'expression suivante :

$$Fb(kTr)=Fb(0)+Fd(kTr) \qquad (1)$$

dans laquelle :

Fd(kTr) représente la fréquence doppler ;
k est un entier quelconque ;
Tr est le temps entre deux mesures successives.

L'expression (1) n'est rigoureusement valide que dans la mesure où l'effet de l'accélération sur les fréquences émises est négligeable. C'est le cas par exemple lorsque l'oscillateur utilisé dans le dispositif d'émission est réalisé à partir d'un quartz, dont la sensibilité à l'accélération est de l'ordre de $10^{-10}$/g. Dans le cas contraire, il est toujours possible de compenser l'estimation de la fréquence doppler par une table de correction, connaissant grossièrement a priori l'évolution de l'accélération en fonction du temps et les caractéristiques de sensibilité de la variation de fréquence de l'émetteur en fonction de l'accélération.

Sachant que $\lambda$ est la longueur d'onde utilisée, la vitesse radiale Vr(kTr) de l'engin à l'instant kTr peut alors être déduite de la relation suivante :

$$Fd(kTr) = \frac{Vr(kTr)}{\lambda} \qquad (2)$$

De la même façon, l'accélération γr(kTr) à l'instant kTr peut être estimée en utilisant l'expression :

$$\gamma r(kTr) = \frac{Vr((k+1)Tr) - Vr(kTr)}{Tr} \qquad (3)$$

La distance parcourue à l'instant (k+1)Tr peut être estimée de façon récursive en utilisant l'expression :

$$Dr((k+1))Tr = \frac{1}{2}\gamma r(kTr)Tr^2 + Vr(kTr)Tr + Dr(kTr) \qquad (4)$$

La vitesse moyenne est estimée en calculant la valeur centrale du spectre de fréquence calculée en sortie de FFT sur une durée Tr.

Le résultat de l'analyse spectrale de cette estimation dans l'intervalle de temps [kTr, (k+1)Tr] correspond à l'estimation de la vitesse radiale au temps t= ((k+1/2))Tr/2, Vr((k+1/2))Tr/2) soit :

$$Vr((k+\frac{1}{2})Tr) = \lambda Fd(kTr) \qquad (5)$$

Par exemple, pour une longueur d'onde de 4 mm et une durée d'analyse Tr=1,28 ms, la résolution doppler ΔFd=1/Tr d'un filtre FFT est de 781 Hz, ce qui correspond à une résolution de vitesse ΔVr=λΔFd de 3,1 m/s. Typiquement, la précision de l'estimation de la vitesse est égale à 1/10ème de la largeur du filtre d'analyse, soit 0,3 m/s.

Il peut être ensuite procédé à une estimation du site. Les signaux reçus des différentes antennes de l'émetteur embarqué sont séparés en sortie FFT, directement si ces signaux correspondent à des sinusoïdes de fréquences différentes, ou par un corrélateur adapté, si ces signaux ont été codés en phase, en amplitude ou en fréquence.

En fonction de l'angle de roulis de l'engin, à un instant donné, les signaux transmis par au moins une antenne d'émission sont perturbés par les réflexions sur le sol. Pour une antenne située à la hauteur h1 par rapport au sol et pour un émetteur situé à la hauteur h2 par rapport au sol, la périodicité des franges d'interférence est donnée par l'expression suivante :

$$D_i = \frac{2h_1 h_2}{\lambda i} \tag{6}$$

dans laquelle :

i est un nombre entier correspondant à la i-ième frange et $D_i$ correspond à la distance entre le minimum de la (i-1)-ième frange et le minimum de la i-ième frange.

La figure 9 montre, pour un coefficient de réception de 0,9 et une longueur d'onde de 4 mm, l'allure des franges d'interférences dans un cas typique où l'engin vole à 1 m au-dessus du sol, et où le récepteur est lui aussi à 1 m de hauteur par rapport au sol.

Une première solution pour rejeter les mesures consiste à vérifier la cohérence d'amplitude du signal reçu au cours du temps.

L'engin se déplaçant avec une vitesse très élevée, typiquement supérieure à 100 m/s, l'amplitude du signal reçu varie en effet très rapidement en fonction du temps, en présence de réflexions sur le sol, en particulier dans les premiers instants suivant la sortie du tube de lancement.

Une seconde possibilité consiste à utiliser en réception au moins deux antennes identiques et de même polarisation, disposées à deux hauteurs différentes, et à rejeter les mesures correspondant à des signaux d'amplitudes différentes reçus simultanément sur les deux antennes. L'estimation du site est alors obtenue par mesure mono-pulse sur les signaux dont l'amplitude apparaît identique sur les deux antennes.

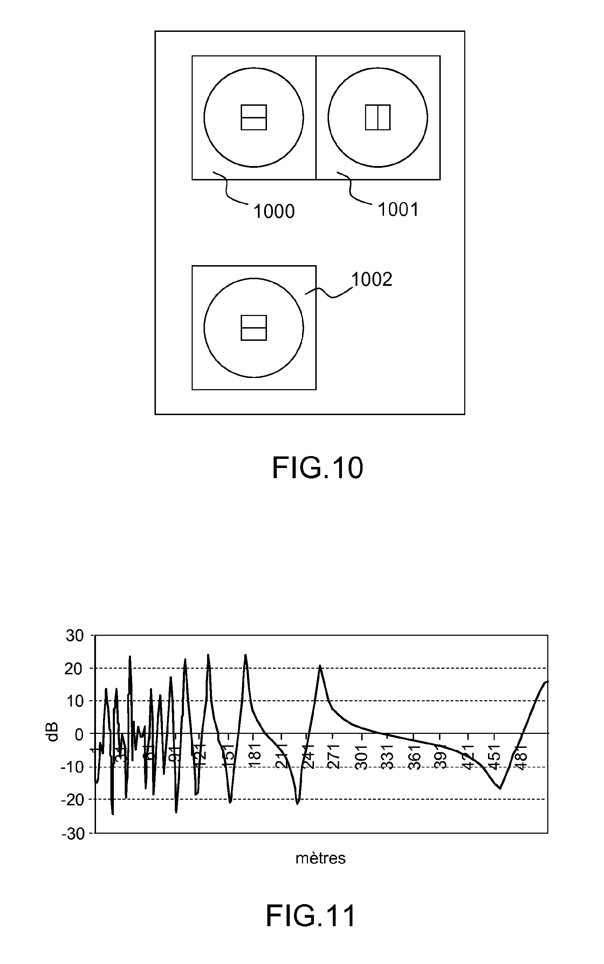

Le dispositif de réception comprend alors au moins trois récepteurs 1000, 1001, 1002, dont deux sont utilisés pour la mesure de site, comme le montre l'exemple de la figure 10.

La figure 11 présente la différence des niveaux d'amplitude reçus en fonction du temps pour deux antennes espacées de 10 cm en hauteur. Avantageusement, les deux alternatives permettant de rejeter les signaux perturbés par les réflexions peuvent être utilisés conjointement.

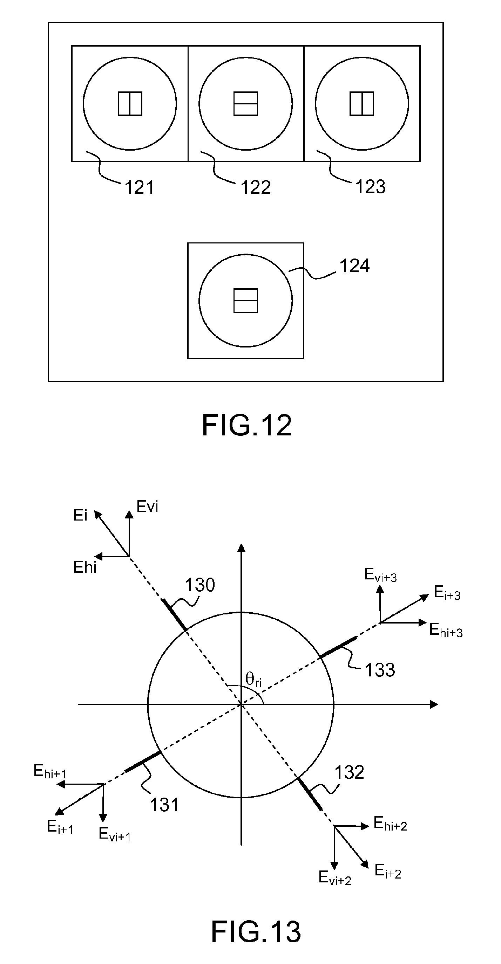

Pour ce qui est de l'estimation du gisement, la technique de mesure par écartométrie mono-pulse est utilisée. Comme pour la mesure de site, il est possible si nécessaire d'éliminer les mesures qui sont perturbées par des réflexions latérales avec les mêmes méthodes. La figure 12 présente un exemple de configuration d'antennes appartenant au dispositif de réception et permettant de s'affranchir à la fois des réflexions sur le sol et des réflexions latérales par la diversité de position des antennes. Dans ce cas, le dispositif de réception 120 comprend 4 antennes 121, 122, 123, 124. Deux antennes 122, 124 en polarisation verticale sont réparties à des hauteurs différentes et permettent la mesure de site, c'est-à-dire l'angle de site de l'engin volant par rapport à l'axe radioélectrique des antennes. Les deux autres antennes 121, 123 sont en polarisation horizontale et réparties sur un plan horizontal pour permettre la mesure du gisement.

La figure 13 illustre le principe d'estimation de roulis. Le dispositif d'émission utilise préférentiellement des antennes en polarisation verticale locale, c'est-à-dire pour chacune selon un axe perpendiculaire au plan tangent au fuselage en leur point de localisation sur ce dernier. La polarisation de l'onde reçue par le dispositif de réception comprend pour chaque antenne d'émission 130, 131, 132, 133 une composante en polarisation verticale Ev, et une composante en polarisation horizontale Eh, fonction de l'angle de roulis. Le rapport d'amplitude entre les deux composantes du champ électrique de chaque signal permet d'estimer le roulis.

En prenant comme référence pour l'angle de roulis $\theta_{ri}$ l'angle entre l'axe horizontal perpendiculaire à l'axe du fuselage et l'axe de l'antenne i, le champ électrique rayonné par l'antenne i $E_i$ comprend une composante verticale $E_{vi}$ et une composante horizontale $E_{hi}$ telles que :

$$E_{hi} = E_i \cos(\theta_{ri}) \tag{7}$$

$$E_{vi} = E_i \sin(\theta_{ri}) \tag{8}$$

A la réception, à un instant donné t, une antenne polarisée en polarisation horizontale reçoit de l'antenne i un signal de la forme :

$$R_{h_i} = KE_i \cos(\theta_{r_i}) \qquad (9)$$

L'antenne polarisée en polarisation horizontale reçoit de la même antenne i un signal pouvant s'exprimer à l'aide de l'expression suivante :

$$R_{v_i} = KE_i \sin(\theta_{r_i}) \qquad (10)$$

dans laquelle K est une constante qui prend en compte les pertes de propagation.

L'angle de roulis peut alors être évalué à $\pi$ près en utilisant les expressions :

$$\theta_{r_i} = arctg(\frac{R_{vi}}{R_{hi}}) \qquad (11)$$

$$\theta_{r_i} = arctg(\frac{R_{vi}}{R_{hi}}) + \pi \qquad (12)$$

Le même calcul peut être effectué sur les signaux issus des différentes antennes du dispositif d'émission, de façon à consolider la mesure.

Par ailleurs, il est possible d'estimer la vitesse de rotation de l'engin sur lui-même, soit directement en répétant la mesure à intervalles de temps réguliers et en estimant l'angle de roulis parcouru pendant cet intervalle de temps régulier, ou en mesurant la fréquence de rotation par transformée de Fourier de l'amplitude des signaux reçus d'une même antenne au cours du temps.

L'ambiguïté sur la mesure de l'angle de roulis peut alors être levée à partir de la connaissance de l'angle de roulis initial et du sens de rotation de l'objet, en intégrant la vitesse du roulis estimée au cours du temps.

Il est également possible de mesurer directement la position de chaque antenne lorsque l'objet est encore à faible distance, typiquement au-dessous de 100 m, puis de compter le nombre de tours sur lui-même effectué par l'engin au cours du temps.

En effet, chaque antenne décrit temporellement un cercle centré sur le fuselage de l'objet et il est possible d'estimer à un instant donné la position angulaire correspondante en utilisant en réception une base interférométrique par exemple selon la figure 12.

Typiquement, pour un cercle de rotation de diamètre 10 cm, la position angulaire de deux antennes opposées par rapport au fuselage diffère de 1 mrd à 100 m, ce qui est détectable par la mesure à condition de disposer d'une base de mesure d'une longueur suffisante, typiquement de l'ordre de 20 cm à 80 GHz.

Une fois l'ambiguïté de position initiale levée par cette méthode il suffit d'intégrer le nombre de tours en comptant les demi-rotations pour déduire la position instantanée de chacune des antennes.

Cette solution peut aussi être améliorée par la mesure en comparant en différentiel les variations d'amplitude des signaux reçus correspondant aux antennes symétriquement opposées par rapport au fuselage. Lorsque l'antenne est orientée vers le haut, le signal reçu correspondant n'est pas affecté par les réflexions sur le sol alors que les réflexions sur le sol ont une influence inéluctable pour l'antenne orientée vers le bas. Une fois cette discrimination établie, même temporairement tel que montré dans la figure 9 un comptage des demi-tours peut être effectué par la mesure de la polarisation de l'onde reçue.

Une troisième solution consiste à appliquer une déviation dans une direction donnée et de corréler les mesures avec la réaction de l'engin. L'indétermination est alors immédiatement levée. Cette détection peut se faire instantanément si nous disposons par exemple 4 antennes d'émission réparties uniformément sur la section du fuselage ou séquentiellement si nous n'avons que de deux antennes symétriques par rapport au fuselage.

En fonction de la vitesse de rotation et de la vitesse de l'engin, une solution à une seule antenne peut aussi être envisagée, contraignant le système à faire des mesures séquentielles.

Enfin, il est possible de lever l'ambiguïté sur l'angle de roulis à partir d'un capteur embarqué de type accéléromètre ou magnétomètre par exemple, ce capteur délivrant une information de position angulaire de faible précision, mais suffisante pour lever l'ambiguïté « haut-bas » ou « gauche droite ».

**Revendications**

1. Système de localisation et de guidage comprenant un engin volant et un dispositif de réception (401), **caractérisé en ce que** ledit engin comprend une pluralité d'antennes (400, 402) réparties autour de son fuselage et émettant vers l'arrière dudit engin en polarisation rectiligne, les signaux émis étant spécifiques à chaque antenne, les positions et les dimensions desdites antennes (400, 402) étant choisies de manière à ce que le corps de l'engin volant évite par masquage pour au moins une antenne les réflexions du signal émis par cette antenne sur le sol ou sur des obstacles latéraux quelle que soit la position de l'engin volant, le dispositif de réception (401) étant placé sensiblement sur l'axe de trajectoire de l'engin volant et orienté dans sa direction de façon à viser l'arrière de celui-ci et comprenant au moins deux antennes mono-pulse (600, 601) fonctionnant dans des plans orthogonaux et des moyens de détermination de la position de l'engin volant par analyse des signaux (403, 404) émis par les antennes (400, 402) de l'engin et reçus par les antennes (600, 601) du dispositif de réception.

2. Système selon la revendication 1 dans lequel un circuit de contrôle de modulation (201) caractérisant le signal émis par chacune des antennes (203, 204, 205, 206) est utilisé par l'engin volant de façon à ce que le dispositif de réception soit en mesure d'identifier et de traiter séparément les signaux émis par chacune de ces antennes.

3. Système selon l'une des revendications 1 ou 2 dans lequel un générateur de formes d'onde (200) est embarqué dans l'engin volant et délivre séquentiellement et de façon périodique à chacune des antennes sur une fréquence différente un signal sinusoïdal.

4. Système selon la revendication 3 dans lequel un temps mort S d'émission est aménagé périodiquement de façon à permettre la synchronisation d'un dispositif de réception.

5. Engin volant comprenant une pluralité d'antenne (400, 402) réparties autour de son fuselage et émettant vers l'arrière dudit engin en polarisation rectiligne, les signaux émis étant spécifiques à chaque antenne, les positions et les dimensions desdites antennes (400, 402) étant choisies de manière à ce que le corps de l'engin volant évite par masquage pour au moins une antenne les réflexions du signal émis par cette antenne sur le sol ou sur des obstacles latéraux quelle que soit la position de l'engin volant.

6. Engin volant selon la revendication 5 dans lequel les antennes (203, 204, 205, 206) sont réalisées à partir de lignes hyperfréquence à fuites, rectilignes et disposées sensiblement perpendiculairement au fuselage de l'engin.

7. Engin volant selon l'une des revendications 5 ou 6 dans lequel des ailettes servent à guider l'engin, les antennes d'émission (102, 103, 104) étant fixées sur lesdites aillettes.

8. Dispositif de réception (401) comprenant au moins deux antennes mono-pulse (600, 601) pointées selon la même direction de visée et fonctionnant dans des plans orthogonaux et des moyens pour identifier et de traiter séparément les signaux émis par chacune de ces antennes d'un engin volant selon l'une quelconque des revendications 5 à 7, lesdits moyens étant adaptés de manière à ce les signaux émis par chacune de ces antennes soient dentifiés et traités séparément et que les signaux reçus perturbés par des réflexions soient automatiquement détectés et rejetés.

9. Dispositif de réception selon la revendication 8 dans lequel sont employées deux chaînes de réception (800, 801), chaque chaîne comprenant un oscillateur de référence cohérent contrôlé en fréquence (804, 805), des amplificateurs faible bruit (810, 811, 812, 813, 814, 815, 816, 817), des filtres (818, 819, 820, 821), un mélangeur, des moyens de conversion analogique-numérique (822, 823, 824, 825), des moyens de codage et de traitement de signal basé sur une transformée de Fourier rapide FFT (806, 807), et des moyens de traitement communs (809) aux deux chaînes.

10. Dispositif de réception selon l'une des revendications 8 ou 9 dans lequel la localisation angulaire en site et en gisement est déterminée par écartométrie mono-pulse deux plans à partir des signaux émis par les antennes de l'engin volant.

11. Dispositif de réception selon l'une des revendications 8 à 10 dans lequel la fréquence doppler du signal émis par l'engin sur chacune des sources d'émission est mesurée, la distance parcourue par l'engin étant déduite par intégration temporelle de cette mesure.

**12.** Dispositif de réception selon l'une des revendications 8 à 11 dans lequel la valeur du roulis et la vitesse du roulis de l'engin sont estimées en mesurant l'amplitude du signal reçu sur deux polarisations rectilignes orthogonales.

**13.** Dispositif de réception selon l'une des revendications 8 à 12 dans lequel la composante à rejeter des signaux reçus est identifiée en vérifiant la cohérence d'amplitude desdits signaux reçu au cours du temps.

**14.** Dispositif de réception selon l'une des revendications 8 à 12 dans lequel sont utilisées en réception au moins deux antennes identiques et de même polarisation, disposées à deux hauteurs différentes, les mesures correspondant à des signaux d'amplitudes différentes reçus simultanément sur les deux antennes étant rejetés.

**15.** Dispositif de réception selon l'une des revendications 8 à 12 dans lequel quatre antennes sont utilisés, deux antennes (122, 124) en polarisation verticale étant réparties à des hauteurs différentes et permettant la mesure de site, deux autres antennes (121, 123) étant en polarisation horizontale et réparties sur un plan horizontal pour permettre la mesure du gisement.

**16.** Dispositif de réception selon l'une des revendications 8 à 15 dont la position est située sensiblement au niveau du sol, ledit dispositif étant fixe ou mobile.

**17.** Dispositif de réception selon l'une des revendications 8 à 15 embarqué dans un aéronef.

FIG.1

FIG.2

FIG.3

FIG.4

FIG.5

FIG.6

FIG.7

FIG.8

mètres

FIG.9

FIG.10

FIG.11

FIG.12

FIG.13

| | Europäisches Patentamt European Patent Office Office européen des brevets | **RAPPORT DE RECHERCHE EUROPEENNE** | Numéro de la demande EP 12 18 3747 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/184192 A1 (SCHNEIDER ARTHUR J [US]) 25 août 2005 (2005-08-25) * abrégé * * alinéas [0007], [0020] - [0025], [0032] * * figures 1-5 * * revendications 19, 23 * ----- | 1-17 | INV. F41G7/28 G01S1/14 F41G7/30 |
| X | WO 99/53259 A1 (RAYTHEON CO [US]) 21 octobre 1999 (1999-10-21) * abrégé * * page 7, ligne 23 - ligne 27 * * figures 3, 8 * * revendications 1, 11 * ----- | 1-17 | |
| A | WO 01/86229 A2 (ADVANCED NAVIGATION & POSITION [US]) 15 novembre 2001 (2001-11-15) * page 13, ligne 2 - ligne 26 * * figure 4 * ----- | 1-17 | |
| | | | DOMAINES TECHNIQUES RECHERCHES (IPC) F41G G01S |

| Le présent rapport a été établi pour toutes les revendications | | |
|---|---|---|
| Lieu de la recherche La Haye | Date d'achèvement de la recherche 1 octobre 2012 | Examinateur Van den Bosch, I |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................................
& : membre de la même famille, document correspondant

EPO FORM 1503 03.82 (P04C02)

**EP 2 568 251 A1**

ANNEXE AU RAPPORT DE RECHERCHE EUROPEENNE
RELATIF A LA DEMANDE DE BREVET EUROPEEN NO.

EP 12 18 3747

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2012

| Document brevet cité au rapport de recherche | Date de publication | Membre(s) de la famille de brevet(s) | Date de publication |
|---|---|---|---|
| US 2005184192 A1 | 25-08-2005 | AT 366910 T | 15-08-2007 |
| | | DE 602005001616 T2 | 10-04-2008 |
| | | EP 1718918 A2 | 08-11-2006 |
| | | US 2005184192 A1 | 25-08-2005 |
| | | WO 2006019409 A2 | 23-02-2006 |
| WO 9953259 A1 | 21-10-1999 | DE 69905319 D1 | 20-03-2003 |
| | | DE 69905319 T2 | 27-11-2003 |
| | | EP 0988501 A1 | 29-03-2000 |
| | | JP 3247393 B2 | 15-01-2002 |
| | | JP 2000513801 A | 17-10-2000 |
| | | NO 995955 A | 08-02-2000 |
| | | US 6016990 A | 25-01-2000 |
| | | WO 9953259 A1 | 21-10-1999 |
| WO 0186229 A2 | 15-11-2001 | AT 279735 T | 15-10-2004 |
| | | AU 7482201 A | 20-11-2001 |
| | | CA 2409547 A1 | 15-11-2001 |
| | | CN 1441909 A | 10-09-2003 |
| | | DE 60106446 D1 | 18-11-2004 |
| | | DE 60106446 T2 | 02-02-2006 |
| | | EP 1297307 A2 | 02-04-2003 |
| | | ES 2232631 T3 | 01-06-2005 |
| | | MX PA02011010 A | 19-08-2004 |
| | | NZ 523021 A | 25-06-2004 |
| | | US 6469654 B1 | 22-10-2002 |
| | | WO 0186229 A2 | 15-11-2001 |

EPO FORM P0460

Pour tout renseignement concernant cette annexe : voir Journal Officiel de l'Office européen des brevets, No.12/82